# EUROPEAN PATENT SPECIFICATION

(11) **EP 0 843 865 B1**
(45) Date of publication and mention of the grant of the patent: **05.04.2000**
(21) Application number: 95933416.0
(22) Date of filing: 22.09.1995
(51) Int. Cl.: G06K 19/077, G06K 7/08

(54) **POCKET INTERFACE UNIT (PIU) FOR A SMART DISKETTE**
TASCHENSCHNITTSTELLENEINHEIT FÜR EINE SMART-DISKETTE
UNITE D'INTERFACE DE POCHE (PIU) POUR DISQUETTE INTELLIGENTE

(30) Priority: 11.08.1995 US 514382
(43) Date of publication of application: 27.05.1998
(73) Proprietor: SMARTDISKETTE GmbH, D-65510 Idstein (DE)
(72) Inventor: BARRETT, Paul, Worcester Park, Surrey KT4 7PU (GB); EISELE, Raymund, D-65510 Idstein (DE)
(74) Representative: Leineweber, Jürgen, Dipl.-Phys.
(86) International application number: EP9503745
(87) International publication number: WO9707481

(56) References cited:
- EP-A- 0 461 456
- EP-A- 0 542 524
- EP-A- 0 653 719
- WO-A-93/00658
- WO-A-93/07555
- GB-A- 2 285 367
- US-A- 5 159 182

## Description

### BACKGROUND OF THE INVENTION

### 1. Field of The Invention

The present invention relates generally to the field of computer user interfaces, and in particular to a pocket user interface (PIU) device which is adapted to accommodate and/or interface with a smart diskette.

### 2. Background Information

A smart diskette is a device having the external shape of, for example, a standard 3½" diskette, and which contains therein, instead of and/or in addition to a magnetic medium, interface and processing circuitry for providing particular functionality to the device.

The smart diskette circuitry includes an interface for transferring data between other components on the device and a magnetic head of a standard disk drive. In various forms, the smart-diskette device also includes a microprocessor for controlling the device and performing various tasks, such as data encryption, and memory, in the form of RAM (random access memory), ROM (read only memory), EEPROM (electronically erasable/programmable read only memory), and/or Flash memory devices, for storing programs and data.

U.S. Patent No. 5,159,182 and corresponding EU-A-373 411 disclose a smart-diskette insertable element with magnetic interface, processor, power supply and optional display and keypad to be inserted into a standard 3½" floppy disk drive, for example, of a host computer, i.e., electronic data processing (EDP) equipment, such as a desk-top personal computer (PC) or notebook computer.

An exemplary embodiment of the smart-diskette insertable element disclosed in the above-mentioned patent and application, has a processor with a built-in memory and an interface designed in such a way that it is possible to exchange data between the element's processor and the EDP equipment's disk drive read/write head. A driver converts signals coming from the element's processor into the required magnetic form at the interface, and converts signals coming from the external EDP equipment through the interface into the required form for the processor.

A significant advantage of this smart diskette insertable element is that, by virtue of its insertability into a standard disk drive and interfaceability therewith, it is possible to carry-out operations with the element's processor, such as encryption and decryption of data or verification of user identity, without requiring a special interface or plug-in board which might be suitable only for a particular computer system.

Another advantageous feature of the smart diskette insertable element is its ability to store additional data and/or programs in on-board memory connected with the element's processor. This considerably increases the potential areas of application for the element.

The smart diskette element disclosed in the above patent and application, may also be equipped with a battery power source supplying power to other electronic components within the element.

The interface of the smart diskette insertable element is designed to allow data to be relayed through it, between the element's processor and the read/write head of the disk drive. One way of achieving this is to place an electromagnetic component, e.g., one or more coils, in the vicinity of the interface which is able to generate magnetic field information equivalent to that generated by the magnetic disk of a standard, e.g., floppy, diskette. In this way the interface is therefore able to simulate the magnetic disk. This property of the interface allows data to be transferred from the element's processor to the EDP-equipment, e.g., data which enables user identification to be verified, thereby providing security to the EDP equipment. The interface receives signals coming from the EDP-equipment via the disk drive write head and passes these on to the element's processor. This exchange of data makes a variety of operations possible, as would be recognized by one skilled in the art.

The smart-diskette disclosed in the above patent and application may also be provided with an alpha-numerical display and/or keypad. The keypad and/or display may be in the form of a separate module attached physically and electrically to the smart diskette element so that it is visible even when the smart-diskette is inserted in the disk drive of a computer terminal (see EP-A-461 456).

As processor capabilities expand and memory devices with increasing capacity become smaller, the smart diskette takes on the potential for more and more useful applications.

PCT application WO 93/07555 discloses a read/write unit with a read/write head and optional electrical contacts, but without the standard disk driving and head moving parts, for use in a desk-top PC or notebook computer to communicate with a smart diskette. By eliminating the drive motor and moving read/write heads, energy otherwise expended by the use of such moving parts is avoided.

Further, such a read/write unit, since it eliminates bulky drive and head motors, can be made more compact than a standard disk drive, thereby reducing the overall size requirements for the computer in which it is installed.

Such a read/write unit in conjunction with a smart diskette operating as a security device can also provide protection from unauthorized use of the computer in which it is installed. Protection against access to the computer, and consequently, any network to which it is attached, is achieved with the aid of the smart diskette which contains corresponding authorization codes and the like, but which can also be used with standard commercially available, e.g., 3½" drives.

Since a normal diskette cannot operate with the read/write unit, an unauthorized user cannot exchange data with the read/write unit. The optional electrical contacts can be used to power the smart diskette components from the computer device in which the read/write unit is installed, and/or to provide another path for data exchange.

Possible applications and advantages of such a read/write unit include providing convenient add-on memory without the need of a special interface, such as PCMCIA. In this regard, the read/write unit operates with a smart diskette having on-board memory of several megabytes, for example.

The read/write unit is particularly useful with notebook and notepad type computers, where energy conservation and weight are very important, since the read/write unit does not have bulky energy consuming moving parts.

This read/write unit can be used with conventional EDP devices as well, e.g., desk-top personal computers, to provide additional security, functioning as a 3½" drive which can be used only with smart diskettes, and not with conventional diskettes.

Simple data exchanges between conventional 3½" drives and notebooks/notepads equipped with the energy conserving read/write unit are facilitated using smart diskettes. In addition, higher data flow rates than with conventional floppy drive units, e.g., up to several Mbit/sec, are achievable with this read/write unit.

Pocket calculators and diary devices are known and gaining acceptance with busy executives, for example. However, such devices have numerous limitations and disadvantages. For example, although such devices can interface with a desk-top computer to download application programs and/or data, for example, or to upload data entered on the pocket device to the desk-top computer, to do so currently requires inconvenient cabling, and/or a special interface unit, e.g., PCMCIA, with associated costs.

In addition, such pocket devices are generally limited to a single special application, such as a phone directory, or a golf-handicap calculator, and do not provide the range of capabilities of a notebook computer, for example.
Although some pocket devices are "programmable," this is often achieved only through the insertion and removal of a limited set of specially made ROM integrated circuit modules available from the manufacturer of the pocket device.

Pocket-sized pagers and cellular telephones are also known. However, these respective devices do not generally have the capability of functioning as anything except a pager or telephone, that is, they are generally devices which are dedicated to a single function.

Therefore, the fully-equipped, fully-functional executive may be burdened by having to carry around a variety of separate devices, which further disadvantageously cannot readily interface with one another.

### SUMMARY OF THE INVENTION

The present invention provides a device with the features of claim 1. The pocket interface unit (PIU), in conjunction with a smart diskette having ever increasing capabilities, solves the above-mentioned problems and disadvantages of the current portable devices, and provides new and useful applications for the smart diskette.

The invention is also set forth in claims 22 and 23.

The PIU is a small portable device which provides a smart diskette with various user interfaces. For example, the PIU can provide the smart diskette with a display, buttons, a keypad or keyboard, a mousepad or trackball, etc.

The PIU can further provide peripheral interfaces, for example, infrared (IR) communications for a printer, mobile (cellular) telephone and/or wired telephone, short range electro-magnetic receiver for heart-rate monitor, cyclometer, etc.

The PIU can itself provide peripheral functions, such as a modem, a mobile (cellular) telephone (data and/or voice), loudspeaker, microphone, etc.

One advantageous aspect of the PIU device is that it is configured as a portable pocket-sized device, and allows a smart diskette, which has had data and programs downloaded from a PC via the standard 3½" floppy diskette drive, for example, to be used for various applications away from the PC.

A further advantage is that, subsequent to use away from a PC, any new data entered or data modified in the smart diskette via the PIU can be uploaded into almost any PC and used, e.g., stored, processed, communicated, etc., by a PC application program.

Advantageously, the PIU device incorporates electrical contacts and/or a read/write unit without energy consuming moving parts, e.g., disk drive motor and/or head moving motor, providing a way to store data entered remotely, while on an airliner, for example, to a smart diskette, the data being later transferred to a portable or desk-top PC from the smart diskette.

By providing a portable device which incorporates a variety of peripheral functions, the need of an executive to carry multiple devices to be fully-equipped is substantially reduced or eliminated.

Flexibility is enhanced with the PIU and smart diskette combination which advantageously provides a number of pocket size electronic devices, e.g., computers, organizers, games, fitness/sports performance monitors, pagers, etc.

Advantageous connectivity through a simple interconnection via a standard 3½" floppy diskette drive to almost any PC is achieved with the PIU according to the present invention.

Advantageous portability is provided by the design in which the PIU with smart diskette can fit into a coat or shirt pocket to be carried and used practically anywhere.

### BRIEF DESCRIPTION OF THE DRAWINGS

The above and other features and advantages of the invention will become apparent from the following detailed description taken with the drawings in which:
Fig. 1 shows a first embodiment of a PIU according to the invention, a "mini" PIU, having a slot for physical attachment to a smart diskette, electrical contacts to exchange data with the smart diskette, a mechanism to operate a switch on the smart diskette switch and a battery;
Fig. 2 shows a second embodiment of a PIU of approximate dimensions 8,9 cm x 8,5 cm x 1,3 cm (3½" x 3½" x .5") with a slot for physical attachment to a smart diskette, electrical contacts and/or a magnetic transducer to exchange data with the smart diskette, a mechanism to operate a switch on the smart diskette and a battery;
Fig. 3 shows another embodiment of a PIU having similar dimensions and features as the embodiment of Fig. 2, but having a touch-screen or write-on display plus a few buttons replacing the keypad as the means of user input;
Fig. 4 shows another embodiment of a PIU having the approximate dimensions of 15,2 cm x 12,7 cm x 1,9 cm (6" x 5" x .75") and having a slot for physical attachment to a smart diskette, electrical contacts to exchange data with the smart diskette, a mechanism to operate a smart diskette switch and a battery;
Fig. 5 shows an exemplary embodiment of a smart diskette;
Fig. 6 shows a read/write device having no drive or head motors for use with a smart diskette;
Fig. 7a shows a smart diskette adapted to receive an IC smart-card;
Fig. 7b shows a cross-section of the smart diskette of Fig. 7a; and
Fig. 7c shows an IC smart-card for insertion in the smart diskette of Fig.s 7a and 7b.

### DETAILED DESCRIPTION OF THE PREFERRED EMBODIMENTS

The invention will now be described in more detail by example with reference to the embodiments shown in the Figures. It should be kept in mind that the following described embodiments are only presented by way of example and should not be construed as limiting the inventive concept to any particular physical configuration.

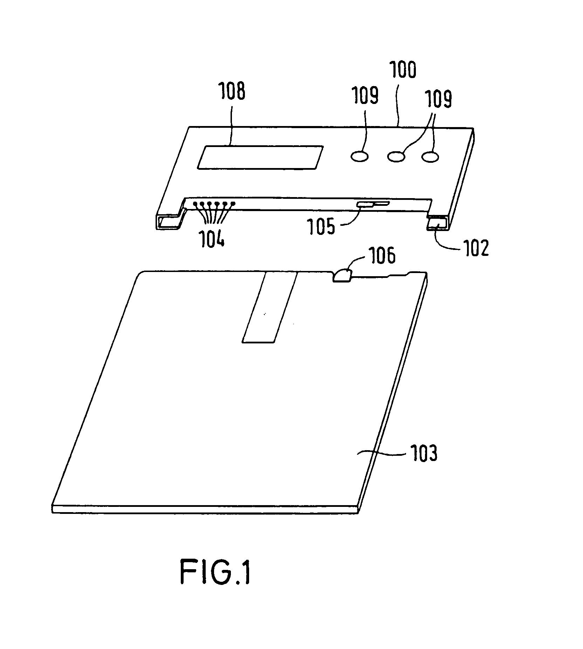

The "mini" PIU 100 according to a first embodiment of the invention, illustrated in Fig. 1, has, for example, a slot 102 for physical attachment to a smart diskette 103, electrical contacts 104 to exchange data with and/or provide power to the smart diskette 103, a mechanism 105 to operate a switch 106 on the smart diskette 103 switch, and an optional battery (not shown). The switch 106 powers the smart diskette 103 when it is inserted into a drive or PIU device. The slot 102 may include detentes therein which fit into corresponding recesses in the smart diskette 103, for example, or other such conventional securing means, for removably securing the smart diskette 103 to the PIU 100.

The optional battery (not shown) could be accessed from the underside, i.e., the side opposite the display, through a conventional access panel, for example. The smart diskette 103 itself may contain an internal battery (not shown) as well.

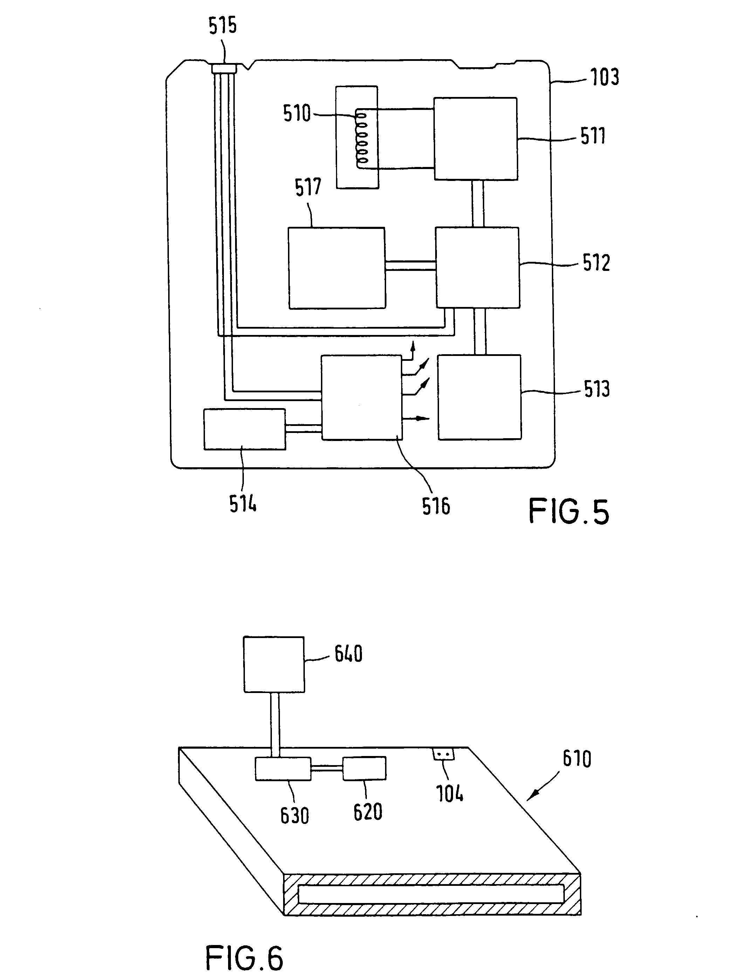

Besides processor, memory and interface circuitry, the smart diskette 103 may also include a real-time clock, and special purpose modules, such as for implementing a cellular telephone, pager, heart-rate monitor, etc. Operating system firmware would be provided on the smart diskette 103, and application program instruction could either be provided in firmware, be down-loadable into RAM memory, or a combination of both. Fig. 5, which will be described below, shows an exemplary smart diskette in more detail.

With the illustrated optional display 108 and buttons 109 a user can read displayed text or graphical data transferred from the smart diskette 103 and, for example, enter selections from a menu presented on the display 108 by actuation of an associated button 109. One of the buttons 109 could advantageously be a manual override power switch to override the switch 106 and de-power the smart diskette 103.

The currently widespread liquid crystal display (LCD) technology provides an effective energy efficient display for use with the PIU 100. Although not illustrated, the PIU display 108 would incorporate conventional circuitry for driving the display 108 based on data transferred from the smart diskette 103. Alternatively, such display driving circuitry could be incorporated into the display 108 itself, or provided on the smart diskette 103, if practical.

The buttons 109 can be configured as mechanical switches, for example, of various conventional types.
Conventional circuitry for detecting/decoding the actuation of a button 109 could be provided on the PIU 100 or alternately the smart diskette 103, as with the display driving circuitry.

Optional further interfaces (not shown) to peripheral devices may be provided on the mini PIU 100, e.g., to a heart-rate monitor or cyclometer, as would be readily apparent to one skilled in the art. These further interfaces may be, for example, infra-red, wired, or wireless links.

For example, a heartbeat detector would transmit pulses of data corresponding to a user's heartbeat via a wireless link to the mini PIU 100 and hence into the smart diskette 103. The smart diskette 103 would store a continuous count of incoming heartbeats and use an on-board real-time clock (not shown) to calculate heart-rate at pre-programmed timing intervals. The user would subsequently insert the smart diskette 103 into a PC's standard 3½" floppy disk drive and run an application program on the PC which would display the recorded heart-rate data and, for example, show comparisons with previous measurements. Further, with the optional display 108 and buttons 109, a user can have an immediate/continuous read-out of his/her heart rate on the PIU 100.

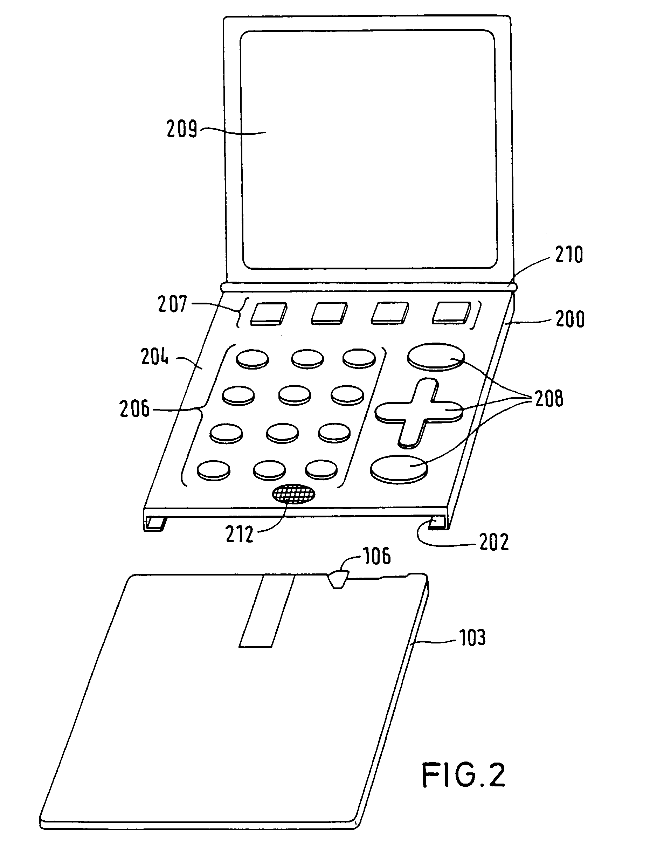

A PIU 200 according to the second embodiment of the invention is illustrated in Fig. 2. The PIU 200 according to this exemplary embodiment would have the approximate dimensions of 8,9 cm x 8,9 cm x 1,3 cm (3½" x 3½" x .5"), for example, and includes slot 202 for physical attachment to a smart diskette 103. Either electrical contacts (104) as in the first embodiment (Fig. 1) and/or a magnetic transducer as in the read/write unit according to WO-A- 93/07555, is provided in the PIU 200 to exchange data with the smart diskette 103. Also provided on PIU 200, but not shown, is a mechanism to operate smart diskette switch 106, and an optional battery, as in the first embodiment of Fig. 1. An exemplary read/write unit is illustrated in Fig. 6, and will be described in more detail below.

Further the illustrated PIU 200 incorporates a keypad 204 provided with, for example, alpha-numerical 206, function 207, and cursor control 208 keys, a display 209, open/closeably connected to the PIU 200 by a hinge 210, for displaying data and/or graphics, with optional touch-screen functions provided through appropriate design and programming, and a piezo-electric beeper, for example (not shown). As with the first embodiment, conventional circuitry for driving the display, keyboard and beeper could be provided on the PIU 200, or alternatively, the smart diskette 103.

Further optional features envisioned could include a conventional transducer or transducers 212, and circuitry (not shown) to operate the PIU 200 as a cellular telephone and/or pager. As with the first embodiment 100, optional interfaces (not shown) to peripheral devices may be provided for on the PIU 200, as would be readily apparent to one skilled in the art.

The second embodiment PIU 200 could be used as follows, for example. A user would insert a smart diskette 103 into a standard 3½" floppy diskette drive of a PC and download, for example, a diary program and data from a PC application into the memory of the smart diskette 103. The smart diskette 103 would then be removed from the PC and inserted into the PIU 200 according to the second embodiment, which may be carried around easily and transported anywhere in the user's coat or shirt pocket. The PIU 200 can then be used to display on display 209 the diary, and update it via the keypad 204 or touch-screen 209 no matter where the user is located, for example, on an airliner or train, or in a restroom. The optional real-time clock inside the smart diskette 103 can produce an audible signal through the PIU piezo-electric beeper (not shown) to warn the user of appointments, etc. thereby functioning as an alarm clock.

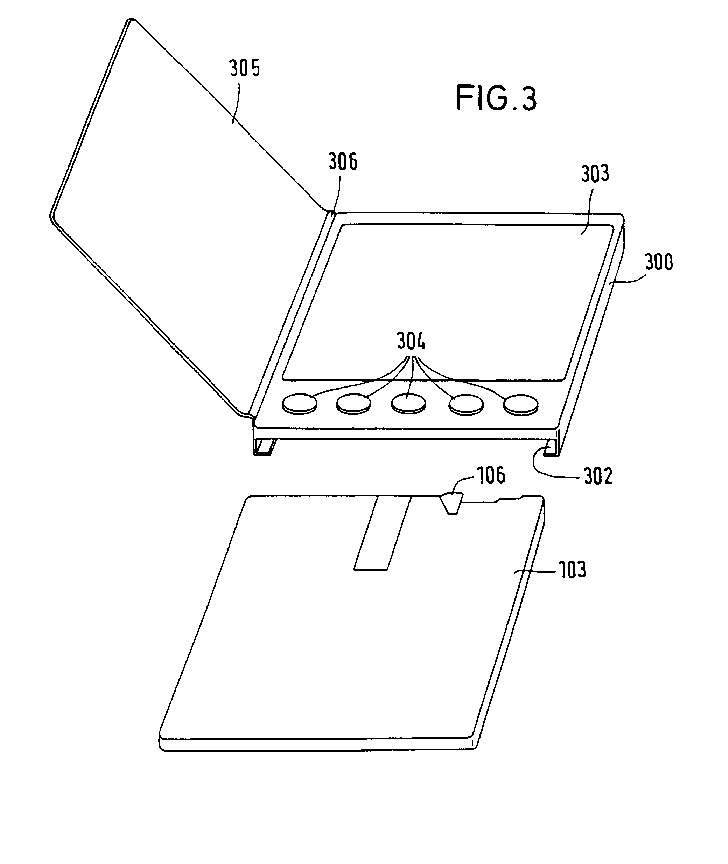

The next exemplary embodiment illustrated in Fig. 3 is a PIU 300 with similar dimensions, i.e., sized to fit easily in a coat or shirt pocket, and features as the embodiment (200) of Fig. 2. The PIU 300 has a slot 302 for accommodating a smart diskette 103, a touch-screen or write-on display 303, and a few buttons 304, instead of the keypad 204 of the second embodiment (200) for user input. An open/closeable cover 305 to protect the display 303 is connected to the main body of the PIU 300 by hinge 306, for example.

Further options which could be included in the embodiment of Fig. 3 would be generally the same as for the embodiment (200) of Fig. 2, that is, conventional transducers and circuitry to operate as a cellular telephone and/or pager, optional interfaces to peripheral devices, etc., as would be readily apparent to one skilled in the art.

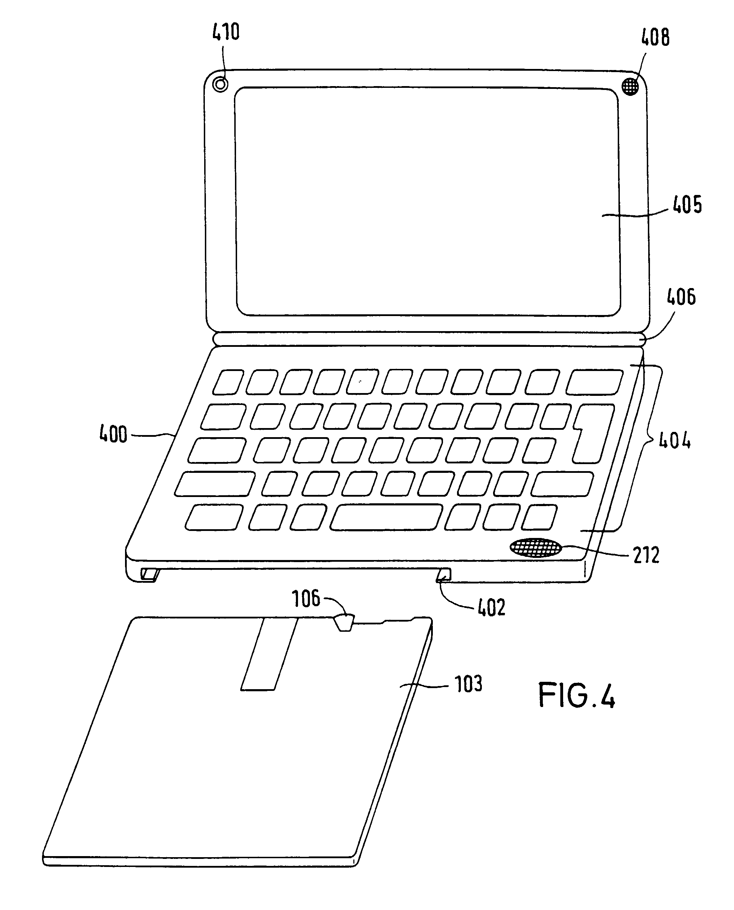

Fig. 4 shows another embodiment of a PIU 400 having, for example, the approximate dimensions of 15,2 cm x 12,7 cm x 1,9 cm (6" x 5" x .75"), with a slot 402 for physical attachment to a smart diskette 103, electrical contacts and/or a magnetic transducer (not shown) as in the previously described embodiments to exchange data with the smart diskette 103, a mechanism (not shown) to operate a smart diskette switch 106, and an optional battery.

This exemplary illustrated embodiment has a small-sized computer "qwerty" keyboard 404 and a relatively large display 405 open/closeably attached by hinge 406 to the PIU body. Also illustrated is an exemplary location of an optional microphone 408 and micro-camera 410. Associated conventional electronic circuitry (not illustrated) for these optional devices 408 and 410 would be located either in the PIU 406 or the smart diskette 103.

Further options for this exemplary embodiment include those mentioned above for the other embodiments, i.e., a conventional transducer or transducers (212), and circuitry to operate as a cellular telephone and/or pager, optional interfaces to peripheral devices, etc., as would be readily apparent to one skilled in the art.

Fig. 5 illustrates an exemplary smart diskette 103 for use with a PIU according to an embodiment of the present invention. A magnetic transducer 510 is electrically coupled to control/interface block 511 to accomplish data transfers to and from a corresponding read/write head in the PIU. The control/interface block 511 is further coupled to processor block 512. Memory block 513, which represent RAM, ROM, EEPROM, Flash memory, etc., is coupled to the processor block 513. Battery 514 supplies power via regulator 516 to the various components. Alternatively, power may be supplied through contacts 515 from the PIU, as previously described. Also, data transfers may be accomplished through contacts 515 if the PIU does not provide a read/write head. Special purpose module block 517 represents the circuitry necessary to implement a special function, e.g., cellular telephone, pager, etc.

Fig. 6 illustrates an exemplary read/write unit 610, provided with contacts 104, a read/write head 620, and a control block 630 which is shown coupled to an external processor 640.

It will be understood that the above descried invention is susceptible to various modifications, changes and adaptations.

For example, the illustrated embodiments are PIU's for use with a 3½" sized smart diskette, however, a PIU which adapts to other sized smart diskettes, e.g., 2", 2-1/4" or 5¼" sized smart diskettes, for example, are considered within the scope of the present invention.

Although the illustrated PIU embodiments accommodate a smart diskette in a slot engagement arrangement, other arrangements are also envisioned. Instead of a slot, the PIU could snap-fit onto a top surface of a smart diskette, for example.

Although the described PIU's optionally include a battery, other appropriate power sources may be provided instead of, or in conjunction therewith, for example, an array of solar cells could be provided on an upper surface of the PIU and/or smart diskette.

The various transducers optionally provided are envisioned to include built-in microphones and speakers, and/or jacks for external microphones and speakers could be provided. Telephone and modem tone generators may be incorporated into the PIU's, as can be visible and infra-red light producing devices, and the like.

Various additional functionality could of course be provided by the smart diskette itself. For example, the smart diskette itself could include additional interface circuitry for coupling to a communications network. The smart diskette could include circuitry for interfacing with any of a variety of peripheral devices, for example, a smart-card (IC) reader.

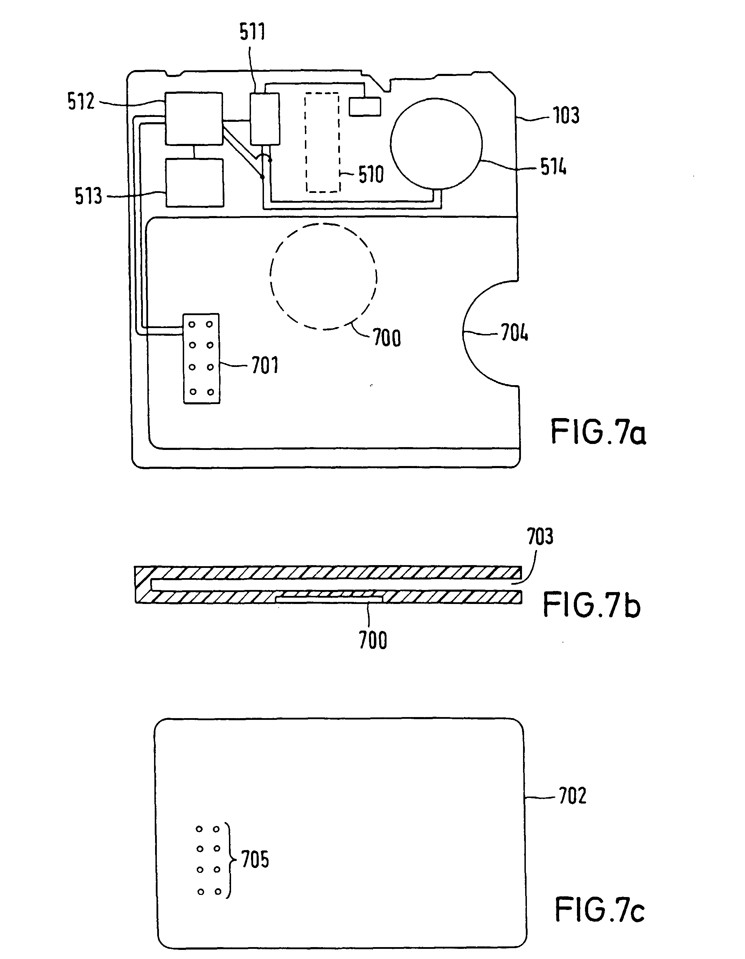

Alternatively, a smart-card reader could be built into the smart diskette, such as illustrated in Figs. 7a, 7b and 7c.

Shown in Figs. 7a-c is one example of a smart diskette 103 adapted to include contacts 701 for interfacing with a smart-card 702 and to include a slot 703 having a cut-out 704 for facilitating grasping the card 702, so that the card 702 is insertable in slot 703 and contacts 701 connect with corresponding contacts 705 on the card 702. The illustrated arrangement of some of the components on the smart diskette has been changed to accomplish this, e.g., battery 514, magnetic interface 511, processor 512, and memory 513. Of course, the location and size of the card receiving slot 703 and the number of contacts 701 would vary depending on the IC smart-card 702 to be accommodated. Recess 700 is disposed on the bottom of the smart diskette 103 where the drive for a magnetic diskette is normally located.

Besides the general security features described above, a wide variety of security related features may be provided by appropriate programming and/or configuring of the smart diskette and/or PIU. For example, a PIU could be provided with a ROM containing a security code which would render it useless with a smart diskette which does not have a corresponding code. Alternatively, the smart diskette could prompt a user for an identification code upon insertion into a PIU, and deny access unless the correct code is entered on the PIU keyboard/keypad.

Besides those applications described above, it is envisioned that the PIU with inserted smart diskette could function to provide an electronic spread-sheet, a perpetual calendar, a telephone directory, a word-processor, entertainment (game) programs, English-foreign language dictionary, financial calculator, stock quote and/or analysis, or any other of the multitude of applications currently available for desk-top and notebook computers.

Other sorts of devices could be built into the PIU, for example, a scanner for scanning written documents into memory, or a micro-camera (410 in Fig. 4) for providing video image storage and/or transmission over cellular telephone, for example. If disguised as or incorporated into an innocuous household or office item, such as a book or lamp, a PIU equipped with an audio or video input device could be used to provide secret monitoring of an area. A smart diskette could be programmed to periodically record in its memory, for example, once a minute, a snap-shot of audio or video input from such a PIU. Subsequently, the smart diskette would be removed and the snap-shots retrieved into a personal computer by security personnel for analysis.

A PIU with a bar code reader could be used in inventory applications. For example, inventory bar codes would be scanned and/or keyed in, and stored in the memory on the smart diskette. Subsequently, the smart diskette could be removed from the PIU and inserted in an inventory control computer's 3½" disk drive for retrieval and processing.

A PIU equipped with a microphone (408 in Fig. 4) could be used as a dictation device where spoken text is digitized and stored in the smart diskette, or in various applications utilizing speech recognition technology. In the latter case, smart diskette 103 would be provided with word/phrase recognition software in memory 513, for example, and/or special purpose module 517 could be a vocoder analyzer, e.g., a programmed digital signal processor for implementing liner predictive coding (LPC). The PIU with smart diskette so configured then could function as a voice response system, i.e., programmed to respond to simple voice commands such as "save" or "run."

Alternately, the PIU with smart diskette configured with microphone 408 and speech recognition software/module could function as a speaker recognition system, i.e., a system which recognizes and/or verifies a particular person (speaker) producing the speech. The verification could be used to obtain access to the PIU functionality.

On the other hand, a PIU equipped with a keypad, display and loud-speaker, for example as in Figs. 2 or 4, could be used as an aid for speech-impaired individuals, where words and/or phrase codes could be keyed in, and spoken text accessed on the smart diskette and output through the loudspeaker. Conventional text to speech circuitry could be provided on the smart diskette in the special purpose module 517, and/or software in memory 513, for such an application.

The PIU keypad could further incorporate a braille keyboard for use by sight-impaired individuals. Foreign language keyboards could be enabled through software and/or be provided as specific PIU's.

Specific medical information about an individual could be stored on a smart diskette, and medical personnel could access the information in an emergency either through a PIU or a hospital computer's 3½" disk drive. Such a smart diskette could be labelled with the international red cross symbol, or the like, identifying it as containing vital medical information. Such information could be stored in the smart diskette in any or all of the major languages for use when travelling abroad. Emergency contacts, such as family or medical specialists to contact in case of an emergency could be stored therein as well.

In a PIU equipped with a cellular telephone module, a panic button or emergency code could be provided on the PIU which would direct the smart diskette with PIU to automatically call emergency personnel. If also equipped with a heart rate monitor, in case of irregular heart beats, or other abnormal heart activity indicative of a medical emergency, the smart diskette could be programmed to call emergency personnel automatically.

The smart diskette could be loaded with bank transaction software and/or a specially configured PIU provided so that banking activities could be readily accomplished remotely. In such an application, security features such as are used conventionally in remote banking would be naturally provided.

A PIU with appropriately programmed smart diskette, could be used as an electronic answer sheet. For example, instead of providing test-takers with pencils and paper answer sheets, each test taker would be given an appropriately programmed smart diskette and PIU. The PIU would be provided with a display and numeric or alpha-numeric keypad. The smart diskette would be programmed to prompt the test taker for his/her unique identification number, such as a social security number or student ID number.

After entering and verifying the ID as being associated with a bonafide student, the smart diskette would prompt the test-taker to open the test booklet and begin the test. The smart diskette with PIU would then display something like "Q1?" and wait for the test-taker to input the number corresponding to his/her answer selection for the first question. When the first answer is entered, the smart diskette would record the answer in its memory and display a prompt for the next question. A built in timer could be provided which would end the test after a pre-programmed time had elapsed.

After the test had been completed, the test-takers would turn-in their smart diskettes and PIU's. To grade the test, the test-giver would simply remove each smart diskette from its PIU, and insert each smart diskette into the 3½" disk drive of a personal computer programmed to access the test-taker's ID and answers, and determine a raw score.

After loading all the test-takers' data, the personal computer could readily identify questions which should be discarded or discounted because all test takers missed them, for example. The personal computer could calculate mean and median scores, assign grades, etc. With such a device, grading errors due to stray or light pencil marks, for example, associated with paper answer sheets would be eliminated. Additionally, special purpose and expensive test reading devices would be eliminated since the ubiquitous personal computer programmed to access the smart diskettes through its 3½" disk drive would be used.

From the above examples it should be apparent that the variety of uses for the present invention are limited only by the imagination of the application programmer. As memory with greater and greater capacity becomes available, the data and program storage capacity of the smart diskette expands accordingly. Likewise, as microprocessors with greater capabilities are developed, so to the capabilities of the smart diskette expand.

As display technology advances, so too does the display capability of the PIU display. The present display technology, e.g., liquid crystal display (LCD), is sure to advance to more efficient and effective displays in response to consumer demand, and the present invention contemplates incorporation of new display technologies as they arise for the PIU display. Likewise, as keyboard standards change, the PIU's can be configured to incorporate such new keyboards.

## Claims

1. A pocket-sized electronic device (103, 100; 103, 200; 103, 300; 103, 400) consisting of
- a smart diskette (103) with a microprocessor (512), a memory (513) and an interface (510, 515), and
- a pocket interface unit (100, 200, 300, 400) with a display (108, 209, 303, 405), buttons (109, 304) or keypad (204, 404) and interface, wherein
- the smart diskette (103) is removably secured to the pocket interface unit (100, 200, 300, 400), so that said interfaces of said smart diskette (103) and said pocket interface unit (100, 200 300, 400) allow a data transfer between said smart diskette (103) and said pocket interface unit (100, 200, 300, 400), wherein
- the microprocessor (512) of the smart diskette (103) is the only controlling microprocessor of the pocket-sized electronic device (103, 100; 103, 200; 103, 300; 103, 400), and wherein the microprocessor (512) and the memory (513) of the smart diskette are loaded with programs, giving the pocket-sized electronic device (103, 100; 103, 200; 103, 300; 103, 400) one or more of the desired functions of a calculator, diary, dictionary, word processor, pager, phone directory, phone, game, organizer, monitor, bar code reader, dictation device, scanner, camera, or of an interface unit between a pheripheral device, such as a printer, reader, computer, phone, receiver, cyclometer, sensor, and the microprocessor.

2. The device according to claim 1 with the smart diskette having a housing of the shape and size of a standard diskette, the smart diskette including electrical contacts, an activation switch, disposed in the housing and operatively coupled to the electrical contacts, the pocket interface unit comprising:
a frame adapted to removably attach to the smart diskette housing;
electrical contacts, disposed on the frame, for engaging corresponding electrical contacts on the smart diskette;
switch operating means, disposed on the frame, for operating the activation switch on the smart diskette when the smart diskette is attached to the frame;
the display, disposed on the frame and operatively coupled to the electrical contacts, for displaying text and/or graphical data under control of the smart diskette; and
a plurality of user actuatable keys, operatively coupled to the electrical contacts, for facilitating user input of data under the control of the smart diskette;
wherein the pocket interface unit provides a user interface with the smart diskette.

3. The device according to claim 2, wherein the plurality of user actuatable keys comprise at least one of:
a set of numeric keys;
a set of function keys; and
a set of cursor control keys.

4. The device according to claim 2, wherein the plurality of user actuatable keys comprise a mini-qwerty keyboard.

5. The device according to claim 2, wherein the display comprises one of:
a touch-screen display; and
a write on display.

6. The device according to claim 2, wherein the frame comprises:
a first portion having a slot which removably engages the housing of the smart diskette; and
a second portion, which is connected to the first portion of the frame by a hinge;
wherein the plurality of user actuatable keys are disposed on a surface of the first portion of the frame.

7. The device according to claim 6, wherein the display is disposed on a surface of the second portion of the frame.

8. The device according to claim 6, wherein the display is disposed on the surface of the first portion of the frame adjacent to the plurality of user actuatable keys, one of said user actuatable keys being a power on/off switch for manually overriding the activation switch; and
wherein the second portion of the frame comprises a open and closeable cover for the display and plurality of user actuatable keys.

9. The device according to claim 2, further comprising means for communicating with at least one of a plurality of external devices, wherein the external devices are selected from the group consisting of:
a cellular telephone network;
an infra-red transmitting and/or receiving device;
a short-range electro-magnetic wave receiver;
a heart rate monitor;
a cyclometer;
a paging system;
a PCMCIA device; and
a wired telephone network.

10. The device according to claim 2, further comprising a power source disposed in the frame, for providing power to the smart diskette through the electrical contacts when the smart diskette is attached to the frame.

11. The device according to claim 10, further comprising a magnetic transducer disposed on the frame for communicating with a corresponding magnetic transducer of a smart diskette when the smart diskette is attached to the frame.

12. The device according claim 1 with the pocket interface unit for said smart diskette, the smart diskette having a housing of the shape and size of a standard diskette, the smart diskette including a magnetic transducer, an activation switch, and an interface, a processor and memory disposed in the housing and operatively coupled to the magnetic transducer, the pocket interface unit comprising:
a frame adapted to removably attach to the smart diskette housing;
a read/write head disposed on the frame, for communicating with the magnetic transducer on the smart diskette;
switch operating means, disposed on the frame, for operating an activation switch on the smart diskette when the smart diskette is attached to the frame; and
a display, disposed on the frame and operatively coupled to the read/write head, for displaying text and/or graphical data under control of the smart diskette;
wherein the pocket interface unit provides a user interface with the smart diskette.

13. The device according to claim 12, further comprising a plurality of user actuatable keys, operatively coupled to the read/write head, for facilitating user input of data under the control of the smart diskette.

14. The device according to claim 12, wherein the display comprises a touch-screen display for displaying text and/or graphical data under control of the smart diskette and inputting corresponding input data in response to a user touching predefined areas of the touch-screen display.

15. The device according to claim 13, further comprising a power source disposed in the frame, for providing power to the smart diskette through the electrical contacts when the smart diskette is attached to the frame;
wherein the plurality of user actuatable keys comprise at least one of:
a set of numeric keys;
a set of function keys; and
a set of cursor control keys; and
wherein one of said user actuatable keys comprises a power on/off key for manually overriding the activation switch.

16. The device according to claim 13, wherein the plurality of user actuatable keys comprise a mini-qwerty keyboard.

17. The device according to claim 13, wherein the frame comprises:
a first portion having a slot which removably engages the housing of the smart diskette; and
a second portion, which is connected to the first portion of the frame by a hinge;
wherein the plurality of user actuatable keys are disposed on a surface of the first portion of the frame.

18. The device according to claim 17, wherein the display is disposed on a surface of the second portion of the frame;
wherein the display is disposed on the surface of the first portion of the frame adjacent to the plurality of user actuatable keys; and
wherein the second portion of the frame comprises a open and closeable cover for the display and plurality of user actuatable keys.

19. The device according to claim 12, wherein the smart diskette includes speech processing means for analyzing and/or synthesizing speech; and wherein the pocket interface unit further comprises:
at least one transducer for transducing electrical signals into audio signals, and/or for transducing audio signals into electrical signals under control of the speech processing means.

20. The device according to claim 12, further comprising means for communicating with at least one of a plurality of external devices, wherein the external devices are selected from the group consisting of:
a cellular telephone network;
an infra-red transmitting and/or receiving device;
a short-range electro-magnetic wave receiver;
a heart rate monitor;
a cyclometer;
a paging system;
a PCMCIA device; and
a wired telephone network.

21. The device according to claim 12, wherein the smart diskette includes means for accommodating and interfacing with an insertable IC card.

22. Method for configuring a pocket-sized electronic device (103, 100; 103, 200; 103, 300; 103, 400) according to one or more of the claims 1 to 21 by
- downloading the desired program or programs from a host computer to the smart diskette (103) via a standard disk drive of the computer and the magnetic transducer (510) of the smart diskette (103) and
- securing the pocket interface unit (100, 200, 300, 400) and the smart diskette (103) together.

23. Utilization of a smart diskette (103), having the outer form of a diskette and being provided with a processor (512), a memory (513) and a transducer (510), allowing the transfer of data between an external EDP equipment and the processor (512) in both directions via a standard disk drive of the EDP equipment,
together with a pocket interface unit (100, 200, 300, 400), provided with means (102, 202, 302, 402) for removably securing the smart diskette (103) to the pocket interface unit (100, 200, 300, 400), so that the interfaces of the smart diskette (103) and of the pocket interface unit (100, 200, 300, 400) allow a data transfer, and with user interfaces, such as a display (108, 209, 303, 405), buttons (109, 304) or keypad (204, 404),
as a pocket-sized device (103, 100; 103, 200; 103, 300; 103; 400) after securing the smart diskette (103) to the pocket interface unit (100, 200, 300, 400) by utilizing the user interfaces (108, 209, 303, 404, 109, 304, 204, 400) of the pocket interface unit (100, 200, 300, 400), said pocket sized device having one or more of the functions of a calculator, diary, dictionary, word processor, pager, phone directory, phone, game, organizer, monitor, bar code reader, dictation device, scanner, camera, or of an interface unit between a peripheral device, such as a printer, reader, computer, phone, receiver, cyclometer, sensor, and the microprocessor (512) of the smart diskette (103), according to a laoded program the processor (512)of the smart diskette (103) being the only processor of the pocked sized electronic device (103, 100; 103, 200; 103, 300; 103, 400),
the program of the desired function of the pocket-sized device (103, 100; 103, 200; 103, 300, 103, 400) being downloaded from an external EDP equipment to the smart diskette (103) before securing the smart diskette (103) to the pocket interface unit (100, 200, 300, 400).

## Patentansprüche

1. Elektronisches Gerät im Taschenformat (103, 100; 103, 200; 103, 300; 103, 400), bestehend aus
- einer Smart-Diskette (103) mit einem Mikroprozessor (512), einem Speicher (513) und einer Schnittstelle (510, 515) und
- einer Taschenschnittstelleneinheit (100, 200, 300, 400) mit einer Anzeige (108, 209, 303, 405), Tasten (109, 304) oder einer Kleintastatur (204, 404) und einer Schnittstelle, wobei
- die Smart-Diskette (103) abnehmbar an der Taschenschnittstelleneinheit (100, 200, 300, 400) befestigt ist, so daß besagte Schnittstellen der besagten Smart-Diskette (103) und der besagten Taschenschnittstelleneinheit (100, 200, 300, 400) eine Datenübertragung zwischen besagter Smart-Diskette (103) und besagter Taschenschnittstelleneinheit (100, 200, 300, 400) ermöglichen, wobei
- der Mikroprozessor (512) der Smart-Diskette (103) der einzige Steuerungs-Mikroprozessor des elektronischen Geräts im Taschenformat (103, 100; 103, 200; 103, 300; 103, 400) ist, und wobei der Mikroprozessor (512) und der Speicher (513) der Smart-Diskette mit Programmen geladen sind, welche dem elektronischen Gerät im Taschenformat (103, 100; 103, 200; 103, 300; 103, 400) eine oder mehrere der gewünschten Funktionen eines Rechners, eines Terminkalenders, eines Wörterbuchs, eines Textverarbeitungssystems, eines Funkrufempfängers, eines Telefonverzeichnisses, eines Telefons, eines Spiels, eines Organisators, eines Monitors, eines Strichcodelesers, eines Diktiergeräts, eines Scanners, einer Kamera oder einer Schnittstelleneinheit zwischen einem peripheren Gerät, wie etwa einem Drucker, Lesegerät, Computer, Telefon, Empfänger, Kilometerzähler, Meßfühler, und dem Mikroprozessor verleihen.

2. Gerät nach Anspruch 1, wobei die Smart-Diskette ein Gehäuse von der Form und der Größe einer Standard-Diskette aufweist und wobei die Smart-Diskette elektrische Kontakte und einen Aktivierungsschalter, der im Gehäuse angeordnet und mit den elektrischen Kontakten funktionsmäßig gekoppelt ist, umfaßt, und wobei die Taschenschnittstelleneinheit umfaßt:
einen Rahmen, der so beschaffen ist, daß er abnehmbar am Gehäuse der Smart-Diskette befestigt werden kann;
am Rahmen angeordnete elektrische Kontakte zur Herstellung einer Verbindung mit entsprechenden elektrischen Kontakten an der Smart-Diskette;
am Rahmen angeordnete Schalterbetätigungsmittel zur Betätigung des Aktivierungsschalters an der Smart-Diskette, wenn die Smart-Diskette am Rahmen befestigt ist;
die am Rahmen angeordnete und funktionsmäßig mit den elektrischen Kontakten gekoppelte Anzeige zum Anzeigen von Text und/oder graphischen Daten unter der Steuerung durch die Smart-Diskette; und
eine Vielzahl von Tasten, die vom Benutzer betätigt werden können und funktionsmäßig mit den elektrischen Kontakten gekoppelt sind, zur Ermöglichung der Eingabe von Daten durch den Benutzer unter der Steuerung durch die Smart-Diskette;
wobei die Taschenschnittstelleneinheit eine Benutzerschnittstelle mit der Smart-Diskette bereitstellt.

3. Gerät nach Anspruch 2, wobei die Vielzahl der Tasten, die vom Benutzer betätigt werden können, wenigstens einen von folgenden Gruppen umfaßt:
eine Gruppe von Zifferntasten;
eine Gruppe von Funktionstasten; und
eine Gruppe von Cursorsteuertasten.

4. Gerät nach Anspruch 2, wobei die Vielzahl der Tasten, die vom Benutzer betätigt werden können, eine Mini-QWERTY-Tastatur umfaßt.

5. Gerät nach Anspruch 2, wobei die Anzeige einen der folgenden Bestandteile umfaßt:
eine Sensorbildschirm-Anzeige; und
eine beschreibbare Anzeige.

6. Gerät nach Anspruch 2, wobei der Rahmen umfaßt:
einen ersten Teil, der einen Schlitz aufweist, welcher abnehmbar in das Gehäuse der Smart-Diskette einrastet; und
einen zweiten Teil, der mit dem ersten Teil des Rahmens durch ein Scharnier verbunden ist;
wobei die Vielzahl der Tasten, die vom Benutzer betätigt werden können, auf einer Fläche des ersten Teils des Rahmens angeordnet ist.

7. Gerät nach Anspruch 6, wobei die Anzeige auf einer Fläche des zweiten Teils des Rahmens angeordnet ist.

8. Gerät nach Anspruch 6, wobei die Anzeige auf der Fläche des ersten Teils des Rahmens neben der Vielzahl von Tasten, die vom Benutzer betätigt werden können, angeordnet ist, wobei eine der besagten Tasten, die vom Benutzer betätigt werden können, ein Ein-Aus-Schalter für die Stromversorgung zur manuellen Unwirksammachung des Aktivierungsschalters ist; und
wobei der zweite Teil des Rahmens einen offenen und verschließbaren Deckel für die Anzeige und die Vielzahl von Tasten, die vom Benutzer betätigt werden können, umfaßt.

9. Gerät nach Anspruch 2, welches ferner Mittel zur Kommunikation mit wenigstens einem aus einer Vielzahl von externen Geräten umfaßt, wobei die externen Geräte aus der Gruppe ausgewählt werden, welche besteht aus:
einem zellularen Funktelefonnetz;
einem Infrarot-Sende- und/oder Empfangsgerät;
einem Nahbereichs-Empfänger elektromagnetischer Wellen;
einem Herzfrequenzmonitor;
einem Kilometerzähler;
einer Personenrufeinrichtung;
einem PCMCIA-Gerät; und
einem Drahtfernmeldenetz.

10. Gerät nach Anspruch 2, welches ferner eine im Rahmen angeordnete Energiequelle zur Stromversorgung der Smart-Diskette über die elektrischen Kontakte, wenn die Smart-Diskette am Rahmen befestigt ist, umfaßt.

11. Gerät nach Anspruch 10, welches ferner einen am Rahmen angeordneten magnetischen Wandler zur Kommunikation mit einem entsprechenden magnetischen Wandler einer Smart-Diskette, wenn die Smart-Diskette am Rahmen befestigt ist, umfaßt.

12. Gerät nach Anspruch 1 mit der Taschenschnittstelleneinheit für die besagte Smart-Diskette, wobei die Smart-Diskette ein Gehäuse von der Form und der Größe einer Standard-Diskette aufweist und wobei die Smart-Diskette einen magnetischen Wandler, einen Aktivierungsschalter und eine Schnittstelle, einen Prozessor und einen Speicher, die im Gehäuse angeordnet und mit dem magnetischen Wandler funktionsmäßig gekoppelt sind, umfaßt, und wobei die Taschenschnittstelleneinheit umfaßt:
einen Rahmen, der so beschaffen ist, daß er abnehmbar am Gehäuse der Smart-Diskette befestigt werden kann;
einen am Rahmen angeordneten Schreib-Lese-Kopf zur Kommunikation mit dem magnetischen Wandler an der Smart-Diskette;
am Rahmen angeordnete Schalterbetätigungsmittel zur Betätigung eines Aktivierungsschalters an der Smart-Diskette, wenn die Smart-Diskette am Rahmen befestigt ist; und
eine am Rahmen angeordnete und funktionsmäßig mit dem Schreib-Lese-Kopf gekoppelte Anzeige zum Anzeigen von Text und/oder graphischen Daten unter der Steuerung durch die Smart-Diskette;
wobei die Taschenschnittstelleneinheit eine Benutzerschnittstelle mit der Smart-Diskette bereitstellt.

13. Gerät nach Anspruch 12, welches ferner eine Vielzahl von Tasten umfaßt, die vom Benutzer betätigt werden können und funktionsmäßig mit dem Schreib-Lese-Kopf gekoppelt sind, zur Ermöglichung der Eingabe von Daten durch den Benutzer unter der Steuerung durch die Smart-Diskette.

14. Gerät nach Anspruch 12, wobei die Anzeige eine Sensorbildschirm-Anzeige zum Anzeigen von Text und/oder graphischen Daten unter der Steuerung durch die Smart-Diskette und Eingeben entsprechender Eingangsdaten in Reaktion auf das Berühren vordefinicrter Bereiche der Sensorbildschirm-Anzeige durch einen Benutzer umfaßt.

15. Gerät nach Anspruch 13, welches ferner eine im Rahmen angeordnete Energiequelle zur Stromversorgung der Smart-Diskette über die elektrischen Kontakte, wenn die Smart-Diskette am Rahmen befestigt ist, umfaßt;
wobei die Vielzahl der Tasten, die vom Benutzer betätigt werden können, wenigstens einen von folgenden Gruppen umfaßt:
eine Gruppe von Zifferntasten;
eine Gruppe von Funktionstasten; und
eine Gruppe von Cursorsteuertasten; und
wobei eine der besagten Tasten, die vom Benutzer betätigt werden können, einen Ein-Aus-Schalter zur manuellen Unwirksammachung des Aktivierungsschalters umfaßt.

16. Gerät nach Anspruch 13, wobei die Vielzahl der Tasten, die vom Benutzer betätigt werden können, eine Mini-QWERTY-Tastatur umfaßt.

17. Gerät nach Anspruch 13, wobei der Rahmen umfaßt:
einen ersten Teil, der einen Schlitz aufweist, welcher abnehmbar in das Gehäuse der Smart-Diskette einrastet; und
einen zweiten Teil, der mit dem ersten Teil des Rahmens durch ein Scharnier verbunden ist;
wobei die Vielzahl der Tasten, die vom Benutzer betätigt werden können, auf einer Fläche des ersten Teils des Rahmens angeordnet ist.

18. Gerät nach Anspruch 17, wobei die Anzeige auf einer Fläche des zweiten Teils des Rahmens angeordnet ist;
wobei die Anzeige auf der Fläche des ersten Teils des Rahmens neben der Vielzahl von Tasten, die vom Benutzer betätigt werden können, angeordnet ist; und
wobei der zweite Teil des Rahmens einen offenen und verschließbaren Deckel für die Anzeige und die Vielzahl von Tasten, die vom Benutzer betätigt werden können, umfaßt.

19. Gerät nach Anspruch 12, wobei die Smart-Diskette Sprachverarbeitungsmittel zur Analyse und/oder Synthese von Sprache umfaßt; und wobei die Taschenschnittstelleneinheit ferner umfaßt:
wenigstens einen Wandler zur Umwandlung elektrischer Signale in Audiosignale, und/oder zur Umwandlung von Audiosignalen in elektrische Signale unter der Steuerung durch die Sprachverarbeitungsmittel.

20. Gerät nach Anspruch 12, welches ferner Mittel zur Kommunikation mit wenigstens einem aus einer Vielzahl von externen Geräten umfaßt, wobei die externen Geräte aus der Gruppe ausgewählt werden, welche besteht aus:
einem zellularen Funktelefonnetz;
einem Infrarot-Sende- und/oder Empfangsgerät;
einem Nahbereichs-Empfänger elektromagnetischer Wellen;
einem Herzfrequenzmonitor;
einem Kilometerzähler;
einer Personenrufeinrichtung;
einem PCMCIA-Gerät; und
einem Drahtfernmeldenetz.

21. Gerät nach Anspruch 12, wobei die Smart-Diskette Mittel zur Unterbringung einer einsteckbaren IC-Karte und zur Schnittstellenbildung mit ihr enthält.

22. Verfahren zum Konfigurieren eines elektronischen Geräts im Taschenformat (103, 100; 103, 200; 103, 300; 103, 400) nach einem oder mehreren der Ansprüche 1 bis 21 durch
- Herunterladen des gewünschten Programms oder der gewünschten Programme von einem Hauptrechner auf die Smart-Diskette (103) über ein Standard-Diskettenlaufwerk des Hauptrechners und den magnetischen Wandler (510) der Smart-Diskette (103) und
- Befestigen der Taschenschnittstelleneinheit (100, 200, 300, 400) und der Smart-Diskette (103) aneinander.

23. Benutzung einer Smart-Diskette (103), welche die äußere Form einer Diskette aufweist und mit einem Prozessor (512), einem Speicher (513) und einem Wandler (510), der die Übertragung von Daten zwischen einer externen EDV-Anlage und dem Prozessor (512) in beiden Richtungen über ein Standard-Diskettenlaufwerk der EDV-Anlage ermöglicht, ausgestattet ist,
zusammen mit einer Taschenschnittstelleneinheit (100, 200, 300, 400), welche mit Mitteln (102, 202, 302, 402) zur abnehmbaren Befestigung der Smart-Diskette (103) an der Taschenschnittstelleneinheit (100, 200, 300, 400), so daß die Schnittstellen der Smart-Diskette (103) und der Taschenschnittstelleneinheit (100, 200, 300, 400) eine Datenübertragung ermöglichen, und mit Benutzerschnittstellen, wie etwa einer Anzeige (108, 209, 303, 405), Tasten (109, 304) oder einer Kleintastatur (204, 404), ausgestattet ist,
als Gerät im Taschenformat (103, 100; 103, 200; 103, 300; 103, 400) nach Befestigung der Smart-Diskette Diskette (103) an der Taschenschnittstelleneinheit (100, 200, 300, 400) unter Benutzung der Benutzerschnittstellen (108, 209, 303, 404, 109, 304, 204, 400) der Taschenschnittstelleneinheit (100, 200, 300, 400), wobei das besagte Gerät im Taschenformat eine oder mehrere der Funktionen eines Rechners, eines Terminkalenders, eines Wörterbuchs, eines Textverarbeitungssystems, eines Funkrufempfängers, eines Telefonverzeichnisses, eines Telefons, eines Spiels, eines Organisators, eines Monitors, eines Strichcodelesers, eines Diktiergeräts, eines Scanners, einer Kamera oder einer Schnittstelleneinheit zwischen einem peripheren Gerät, wie etwa einem Drucker, Lesegerät, Computer, Telefon, Empfänger, Kilometerzähler, Meßfühler, und dem Mikroprozessor (512) der Smart-Diskette (103) aufweist, entsprechend einem geladenen Programm,
wobei der Prozessor (512) der Smart-Diskette (103) der einzige Prozessor des elektronischen Geräts im Taschenformat (103, 100; 103, 200; 103, 300; 103, 400) ist,
wobei das Programm der gewünschten Funktion des Geräts im Taschenformat (103, 100; 103, 200; 103, 300; 103, 400) von einer externen EDV-Anlage auf die Smart-Diskette (103) heruntergeladen wird, bevor die Smart-Diskette (103) an der Taschenschnittstelleneinheit (100, 200, 300, 400) befestigt wird.

## Revendications

1. Dispositif électronique de poche (103, 100 ; 103, 200 ; 103, 300 ; 103, 400) consistant en :
une disquette intelligente (103) dotée d'un microprocesseur (512), d'une mémoire (513) et d'une interface (510, 515), et
une unité d'interface de poche (100, 200, 300, 400) dotée d'un dispositif d'affichage (108, 209, 303, 405), de boutons (109, 304) ou d'un clavier (204, 404) et d'une interface,
où:
la disquette intelligente (103) est fixée de façon amovible à l'unité d'interface de poche (100, 200, 300, 400), de façon que lesdites interfaces de ladite disquette intelligente (103) et de ladite unité d'interface de poche (100, 200, 300, 400) permettant un transfert de données entre ladite disquette intelligente (103) et ladite unité d'interface de poche (100, 200, 300, 400), où le microprocesseur (512) de la disquette intelligente (103) est le seul microprocesseur de commande du dispositif électronique de poche (103, 100 ; 103, 200 ; 103, 300 ; 103, 400), et où le microprocesseur (512) et la mémoire (513) de la disquette intelligente sont chargés au moyen de programmes, qui donnent au dispositif électronique de poche (103, 100 ; 103, 200 ; 103, 300 ; 103, 400) une ou plusieurs des fonctions voulues d'une calculatrice, d'un agenda, d'un dictionnaire, d'un dispositif de traitement de texte, d'un dispositif d'appel de personnes, d'un répertoire téléphonique, d'un poste téléphonique, d'un jeu, d'un agenda organisateur complet dit "organiseur", d'un dispositif de contrôle, d'un lecteur de codes à barres, d'un dispositif de dictée, d'un numériseur graphique, d'un appareil de prise de vues, ou d'une unité d'interface disposée entre un dispositif périphérique, tel qu'une imprimante, un lecteur, un ordinateur, un poste téléphonique, un récepteur, un compteur kilométrique pour bicyclette, un capteur, et le microprocesseur.

2. Dispositif selon la revendication 1, où la disquette intelligente possède un boîtier ayant la forme et la taille d'une disquette normale, la disquette intelligente comportant des contacts électriques, un commutateur d'activation disposé dans le boîtier et fonctionnellement couplé aux contacts électriques, l'unité d'interface de poche comprenant :
un châssis destiné à être fixé de manière amovible au boîtier de la disquette intelligente ;
des contacts électriques, disposés sur le châssis et destinés à venir en contact avec des contacts électriques correspondants de la disquette intelligente ;
un moyen de manoeuvre de commutateur, disposé sur le châssis et servant à manoeuvrer le commutateur d'activation qui est sur la disquette intelligente lorsque la disquette intelligente est fixée au châssis ;
le dispositif d'affichage, qui est disposé sur le châssis et est fonctionnellement couplé aux contacts électriques, servant à afficher du texte et, ou bien, des données graphiques sous commande de la disquette intelligente ;
une pluralité de touches pouvant être actionnées par l'utilisateur, qui sont fonctionnellement couplées aux contacts électriques et servent à faciliter, à l'utilisateur, l'introduction de données sous commande de la disquette intelligente ;
où l'unité d'interface de poche fournit une interface d'utilisateur avec la disquette intelligente.

3. Dispositif selon la revendication 2, où la pluralité de touches pouvant être actionnées par l'utilisateur comprend au moins l'un des ensembles suivants :
un ensemble de touches numériques ;
un ensemble de touches de fonction ; et
un ensemble de touches de commande de curseur.

4. Dispositif selon la revendication 2, où la pluralité de touches pouvant être actionnées par l'utilisateur comprend un mini-clavier du type dit "azerty" ou machine à écrire.

5. Dispositif selon la revendication 2, où le dispositif d'affichage comprend l'un des suivants :
un dispositif d'affichage tactile ; et
un dispositif d'affichage inscriptible, c'est-à-dire sur lequel on peut écrire.

6. Dispositif selon la revendication 2, où le châssis comprend :
une première partie possédant une fente qui vient en prise, de manière amovible, avec le boîtier de la disquette intelligente ; et
une deuxième partie, qui est connectée à la première partie du châssis par une charnière ;
où la pluralité de touches pouvant être actionnées par l'utilisateur sont disposées sur une surface de la première partie du châssis.

7. Dispositif selon la revendication 6, où le dispositif d'affichage est disposé sur une surface de la deuxième partie du châssis.

8. Dispositif selon la revendication 6, où le dispositif d'affichage est disposé sur la surface de la première partie du châssis au voisinage de la pluralité de touches pouvant être actionnées par l'utilisateur, l'une desdites touches pouvant être actionnées par l'utilisateur étant un commutateur de marche/arrêt d'alimentation électrique permettant de donner, manuellement, la priorité sur le commutateur d'activation ; et
où la deuxième partie du châssis comprend un couvercle, que l'on peut ouvrir et fermer, pour le dispositif d'affichage et la pluralité de touches pouvant être actionnées par l'utilisateur.

9. Dispositif selon la revendication 2, comprenant en outre un moyen servant à communiquer avec au moins un dispositif d'une pluralité de dispositifs externes, où les dispositifs externes sont sélectionnés dans le groupe comprenant :
un réseau téléphonique cellulaire ;
un dispositif d'émission et, ou bien, de réception d'ondes infrarouges ;
un récepteur d'ondes électromagnétiques à courte portée ;
un dispositif de contrôle de rythme cardiaque ;
un compteur kilométrique pour bicyclette ;
un système d'appel de personnes ;
un dispositif PCMCIA (c'est-à-dire adaptateur d'interface d'ordinateur à modulation par impulsions codées) ; et
un réseau téléphonique câblé.

10. Dispositif selon la revendication 2, comprenant en outre une source d'alimentation électrique disposée dans le châssis, laquelle sert à fournir de l'énergie à la disquette intelligente via les contacts électriques lorsque la disquette intelligente est fixée au châssis.

11. Dispositif selon la revendication 10, comprenant en outre un transducteur magnétique disposé sur le châssis et servant à communiquer avec un transducteur magnétique correspondant d'une disquette intelligente lorsque la disquette intelligente est fixée au cadre.

12. Dispositif selon la revendication 1, doté de l'unité d'interface de poche pour ladite disquette intelligente, la disquette intelligente ayant un boîtier de la forme et de la taille d'une disquette normale, la disquette intelligente comportant un transducteur magnétique, un commutateur d'activation, ainsi qu'une interface, un processeur et une mémoire disposés dans le boîtier et couplés fonctionnellement avec le transducteur magnétique, l'unité d'interface de poche comprenant :
un châssis destiné à être fixé de manière amovible au boîtier de la disquette intelligente ;
une tête de lecture/écriture disposée sur le châssis et servant à communiquer avec le transducteur magnétique qui se trouve sur la disquette intelligente ;
un moyen de manoeuvre de commutateur disposé sur le châssis et servant à manoeuvrer un commutateur d'activation se trouvant sur la disquette intelligente lorsque la disquette intelligente est fixée au châssis ; et
un dispositif d'affichage, qui est disposé sur le châssis et est fonctionnellement couplé à la tête de lecture/écriture afin d'afficher du texte et, ou bien, des données graphiques sous commande de la disquette intelligente ;
où l'unité d'interface de poche fournit une interface d'utilisateur avec la disquette intelligente.

13. Dispositif selon la revendication 12, comprenant en outre une pluralité de touches pouvant être actionnées par l'utilisateur, qui sont fonctionnellement couplées à la tête de lecture/écriture afin de faciliter l'introduction, par l'utilisateur, de données sous commande de la disquette intelligente.

14. Dispositif selon la revendication 12, où le dispositif d'affichage comprend un dispositif d'affichage à écran tactile servant à afficher du texte et, ou bien, des données graphiques sous commande de la disquette intelligente et à introduire des données d'entrée correspondantes en réponse au fait qu'un utilisateur touche des zones prédéfinies du dispositif d'affichage à écran tactile.

15. Dispositif selon la revendication 13, comprenant en outre une source d'alimentation électrique qui est disposée dans le châssis et sert à fournir de l'énergie à la disquette intelligente via les contacts électriques lorsque la disquette intelligente est fixée au châssis ;
où la pluralité de touches pouvant être actionnées par l'utilisateur comprend au moins l'un des ensembles suivants :
un ensemble de touches numériques ;
un ensemble de touches de fonction ; et
un ensemble de touches de commande de curseur ; et
où l'une desdites touches pouvant être actionnées par l'utilisateur comprend une touche de marche/arrêt d'alimentation électrique permettant de donner, manuellement, la priorité sur le commutateur d'activation.

16. Dispositif selon la revendication 13, où la pluralité de touches pouvant être actionnées par l'utilisateur comprend un mini-clavier du type dit "azerty" ou machine à écrire.

17. Dispositif selon la revendication 13, où le cadre comprend :
une première partie possédant une fente qui vient en prise, de manière amovible, avec le boîtier de la disquette intelligente ; et
une deuxième partie, qui est connectée à la première partie du châssis par une charnière ;
où la pluralité de touches pouvant être actionnées par l'utilisateur sont disposées sur une surface de la première partie du châssis.

18. Dispositif selon la revendication 17, où le dispositif d'affichage est disposé sur une surface de la deuxième partie du châssis ;
où le dispositif d'affichage est disposé sur la surface de la première partie du châssis au voisinage de la pluralité de touches pouvant être actionnées par l'utilisateur ; et
où la deuxième partie du châssis comprend un couvercle, que l'on peut ouvrir et fermer, pour le dispositif d'affichage et la pluralité de touches pouvant être actionnées par l'utilisateur.

19. Dispositif selon la revendication 12, où la disquette intelligente comporte un moyen de traitement de la parole permettant d'analyser et, ou bien, de synthétiser la parole ; et où l'unité d'interface de poche comprend en outre :
au moins un transducteur servant à transformer des signaux électriques en signaux audio, et, ou bien, à transformer des signaux audio en signaux électriques, sous commande du moyen de traitement de la parole.

20. Dispositif selon la revendication 12, comprenant en outre un moyen servant à communiquer avec au moins un dispositif d'une pluralité de dispositifs externes, où les dispositifs externes sont choisies dans le groupe comprenant :
un réseau téléphonique cellulaire ;
un dispositif d'émission et, ou bien, de réception d'ondes infrarouges ;
un récepteur d'ondes électromagnétiques à courte portée ;
un dispositif de contrôle de rythme cardiaque ;
un compteur kilométrique pour bicyclette ;
un système d'appel de personnes ;
un dispositif PCMCIA ; et
un réseau téléphonique câblé.

21. Dispositif selon la revendication 12, où la disquette intelligente comporte un moyen permettant de loger une carte à circuit intégré pouvant être inséré et à assurer l'interface avec cette carte.

22. Procédé de configuration d'un dispositif électronique de poche (103, 100 ; 103, 200 ; 103, 300 ; 103, 400) tel que décrit dans l'une ou plusieurs des revendications 1 à 21, par les opérations suivantes
télécharger le ou les programmes voulus d'un ordinateur principal à la disquette intelligente (103) via un lecteur de disque ordinaire de l'ordinateur et le transducteur magnétique (510) de la disquette intelligente (103), et
fixer ensemble l'unité d'interface de poche (100, 200, 300, 400) et la disquette intelligente (103).

23. Utilisation d'une disquette intelligente (103) présentant la forme externe d'une disquette et étant dotée d'un processeur (512), d'une mémoire (513) et d'un transducteur (510), autorisant le transfert de données entre un équipement de traitement de données électroniques, ou EDP, externe et le processeur (512) dans les deux sens via un lecteur de disque ordinaire de l'équipement EDP, ainsi que d'une interface de poche (100, 200, 300, 400), dotée d'un moyen (102, 202, 302, 402) servant à fixer de façon amovible la disquette intelligente (103) à l'unité d'interface de poche (100, 200, 300, 400) de façon que les interfaces de la disquette intelligente (103) et de l'unité d'interface de poche (100, 200, 300, 400) permettent un transfert de données, et d'interfaces d'utilisateur, comme par exemple un dispositif d'affichage (108, 209, 303, 405), des boutons (109, 304) ou un clavier (204, 404), en tant que dispositif de poche (103, 100 ; 103, 200 ; 103, 300 ; 103, 400) après fixation de la disquette intelligente (103) à l'unité d'interface de poche (100, 200, 300, 400) par utilisation des interfaces d'utilisateur (108, 209, 303, 404, 109, 304, 204, 400) de l'unité d'interface de poche (100, 200, 300, 400), ledit dispositif de poche ayant une ou plusieurs des fonctions d'une calculatrice, d'un agenda, d'un dictionnaire, d'un dispositif de traitement de texte, d'un dispositif d'appel de personnes, d'un répertoire téléphonique, d'un poste téléphonique, d'un jeu, d'un agenda organisateur complet dit "organiseur", d'un dispositif de contrôle, d'un lecteur de codes à barres, d'un dispositif de dictée, d'un numériseur graphique, d'un appareil de prise de vues, ou d'une unité d'interface entre un dispositif périphérique, tel qu'une imprimante, un lecteur, un ordinateur, un poste téléphonique, un récepteur, un compteur kilométrique pour bicyclette, un capteur, et le microprocesseur (512) de la disquette intelligente (103), en fonction d'un programme téléchargé, le processeur 512 de la disquette intelligente (103) étant le seul processeur du dispositif électronique de poche (103, 100 ; 103, 200 ; 103, 300 ; 103, 400), le programme de la fonction voulue du dispositif de poche (103, 100 ; 103, 200 ; 103, 300 ; 103, 400) étant téléchargé d'un équipement EDP externe à la disquette intelligente (103) avant la fixation de la disquette intelligente (103) à l'unité d'interface de poche (100, 200, 300, 400).
